# EUROPEAN PATENT APPLICATION

(11) **EP 1 065 101 A2**
(43) Date of publication of application: **03.01.2001**
(21) Application number: 00305438.4
(22) Date of filing: 28.06.2000
(51) Int. Cl.: B60Q 1/076

(54) **Headlight for motor vehicles**

(30) Priority: 01.07.1999 CZ 238799
(71) Applicant: AUTOPAL S.R.O., Novy Jicin 741 01 (CZ)
(72) Inventor: Strambersky, Libor, Senov U Noveho Jicina 742 42 (CZ); Olivik, Marek, Prerov 750 02 (CZ); Cejnek, Milan, Novy Jicin 741 01 (CZ)
(74) Representative: Godwin, Edgar James

(57) **Abstract**

A headlight for motor vehicles which headlight uses an adjusting actuating member (7) to maintain a correct adjusting of the vertical reflector (1) dip to alter mutual position of said reflector (1) relative to said light source (2) with the objective to change the spacial light distribution.

## Description

### Field of the Invention

The present invention relates to a headlight of reflector design for motor vehicles with a new mechanical construction providing for a change in modes of the headlight for the purpose of changing the spherical light distribution modes. In the low light beam mode the light beam passes convergently (divergently) under a distinct light/dark boundary and in the high light beam mode the light beam is roughly collimated.

### Background of the Invention

The light beam exciting from a headlight can be modified by changing the light source position relative to the reflector. By a shift of the light source off the focus of the parabolic reflector it is caused that the reflected light beam is no more collimated.

Also, by changing the vertical position of the light source relative to the parabolic reflector a vertical shift of the light beam exciting from the parabolic reflector is caused. A number of the dual-filament lamp designs is based on the above mentioned physical principles, whereby the differently positioned filaments are alternatively used in the low and the high light beam modes. Therefore, the operational modes of a headlight can be altered by altering the light source position relative to the reflector.

If a gas discharge arc based light source is used, the European regulation ECE 48 prescribes to use an automatic adjusting system, which system comprises sensors evaluating the vehicle tilt, a control unit evaluating the input signals from sensors and an adjusting actuating member. The adjusting actuating member pivots the whole reflector about a pivot point for the purpose to maintain a correct adjusting of the vertical dip of the low light beam boundary so as it is prescribed by the regulation mentioned above.

In prior art, the disclosed mechanisms used to alter the light source position relative to the reflector use an additional actuating member which member is placed within the headlight (patents US 5,769,525, DE 19741377, DE 19710632). A disadvantage of such designs is that they use two actuating members, whereby, the design space in a headlight necessary to mount the external actuating member is increased. It is also necessary to adjust both the parabolic reflector and the actuating member itself simultaneously. The actuating member itself, which is not mounted within the parabolic reflector space, is also shock-sensitive.

### Summary of the Invention

The above mentioned disadvantage of an external actuating member is removed by a headlight of reflector design for motor vehicles which headlight comprises a reflector of approximately parabolic shape, a light source, an opaque shield, an adjusting actuating member, which member makes possible to alter the vertical adjusting of said reflector for the purpose of a correct adjusting of the headlight to be in compliance with the specified regulation, and of a holding electromagnet, which electromagnet serves to establish an axis of rotation for the light source. The headlight operation mode is altered by a change in the position of the light source relative to the reflector.

A light source is placed within the reflector in proximity to its optical axis. The light source is firmly mounted by means of elastically deformable parts in a holder of the light source. The opaque shield can be placed on the light source holder itself, where the shield prevents impingement of light rays exciting from the bottom part of the light source. Alternatively, the shield can be fixed to the reflector.

The light source holder is coupled with the reflector by means of deformable elements that are placed in its upper part. The elastically deformable element acts so that it pushes the light source holder to a contact surface, whereby, an exact position for the light source relative to the reflector is ensured in the low light beam mode. The bottom part of the light source holder is connected to the adjusting actuating member by means of a joint mechanism. Alternatively, it can be connected to the reflector itself. A holding electromagnet is placed on the light source holder, which electromagnet is able, when voltage is applied, to fix the light source holder to the solid part of the headlamp and the electromagnet itself establishes the axis of rotation about which axis the light source holder and, consequently, also the light source itself rotate.

In the low light beam mode, the light source holder and the light source are static relative to the reflector itself and the adjusting actuating member serves only for adjusting of the light trace. Because of adjusting, the electromagnet position is altered relative to the fixed headlight and the trajectory of the electromagnet is specified by the pivoting point of the reflector, whereby, the reflector pivots about this point, and further by the distance to this pivoting point.

In the high beam mode, electric voltage is applied to the contacts of the holding electromagnet. Thereby, the holding electromagnet is held at the static part of the headlight, whereby, an axis of rotation is formed about which axis the light source holder rotates and, consequently, also the light source itself. To displace the light source, the movement of the adjusting actuating member is used, which member serves for vertical adjustment of the trace. This adjusting actuating member rotates the reflector about the pivot point, whereby, a vertical lifting of the light trace is obtained and, at the same time, it allows rotation of the light source about the axis of rotation which axis is formed by the holding electromagnet. The high light beam mode is obtained by an optimal adjusting of the light source and the reflector.

A switch from the high light beam mode to the low light beam mode consists in the repeated adjustment of the light trace for the low light beam and in disconnecting the voltage applied at the coil terminals of the holding electromagnet.

### Brief Description of the Drawings

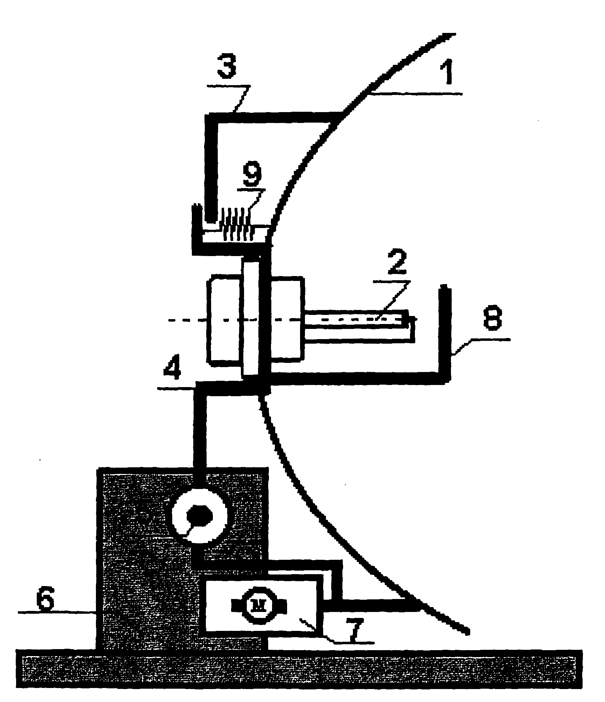

The present invention will now be illustrated in a greater detail with reference to the attached drawing showing a side view of the mechanical and optical layout of a positioning mechanism.

### Detailed Description of the Invention

Referring now to the drawing which schematically shows a mechanical and optical principle of a particularly preferred embodiment of a headlight according to the present invention in side view, the headlight comprises a reflector 1 of approximately parabolic shape, a light source 2, an opaque shield 8 an adjusting actuating member 7 which member allows a change in the vertical adjustment of the reflector 1 for the purpose of a correct adjustment of the headlight according to the requirements specified by the respective regulation, and of a holding electromagnet 5 serving to form an axis of rotation of the light source 2. The headlight modes are altered by changing the position of the light source 2 relative to the reflector 1.

The light source 2 is placed within the reflector 1 in proximity of its optical axis. The light source 2 is firmly connected to a holder 4 of the light source 2 by means of elastically deformable parts 9. An opaque shield 8 can be situated on the holder 4 of the light source 2. The shield 8 prevents passage of rays exciting from the bottom part of the light source 2. This shield 8 can also be firmly fixed to the reflector 1.

The holder 4 of the light source 2 is coupled with the reflector 1 by means of the elastically deformable elements 9, which elements are situated in its upper part. The flexible deformable part 9 acts on the holder 4 of the light source 2 so that it pushes this holder 4 to a contact surface 3, whereby, the exact position of the light source 2 relative to the reflector 1 is ensured. By means of a joint mechanism, the bottom part of the light source 2 holder 4 is connected to an adjusting member 7 or eventually directly to the reflector 1. The holding electromagnet 5 is placed on the holder 4 of the light source 2. The electromagnet 5 is able to hold the holder 4 of the light source 2 so that it is attached to the static part of the headlight 6 when voltage is applied and the holding electromagnet 5 itself forms an axis of rotation, whereby, the holder 4 of the light source 2 rotates about this axis of rotation and the light source 2 as well.

In the low light beam mode, the holder 4 of the light source 2 and the light source 2 are static relative to the reflector 1 and the adjusting actuating member 7 serves only for adjustment of the light trace. Position of the holding electromagnet 5 relative to the static part of the headlamp 6 varies because of the adjusting process. Trajectory of the electromagnet is defined by the pivot point of the reflector 1 around which pivot point the reflector 1 rotates and by the distance to this pivot point.

In the high light beam mode, electric voltage is applied to the holding electromagnet 5. Thereby, the holding magnet 5 is fixed to the static part of the headlamp 6, whereby, an axis of rotation is formed. The holder 4 of the light source 2 rotates about this axis of rotation and, thereby, also the light source 2. Movement of the adjusting actuating member 7, which member 7 serves for adjusting of the vertical trace, is used to displace the light source 2. This adjusting member 7 rotates the reflector 1 about the pivot point, whereby, vertical lifting of the light trace is obtained. Simultaneously, this actuating member 7 makes rotation of the light source 2 about the rotation axis formed by the holding electromagnet 5 possible. The low light beam mode is obtained by an optimal adjustment of the light source 2 relative to the reflector 1.

A change from the high light beam mode to the low light beam mode consists in a repeated adjustment of the light trace to the low light beam mode, and in disconnecting of the electric voltage applied to the electromagnet 5.

### Industrial Use

Headlight systems according to the present invention will find use in headlights that operate alternatively in the low and the high light beam modes, preferably in the headlights of motor vehicles.

## Claims

1. A headlight for motor vehicles which headlight comprises of a reflector a light source, an opaque shield, an adjusting actuating member, and a holding electromagnet, which electromagnet provides for altering of the light source positions between that for the low light beam and that for the high light beam modes, **characterised in that** the change in spacial distribution of light exciting from the headlight is carried out by means of an adjusting actuating member (7), which member (7) makes possible to pivot said reflector (1) about a pivot point and said holding electromagnet (5), which electromagnet (5) ensures establishment of an axis of rotation, about which axis rotation of said light source (2) is made possible, whereby the rotation of said light source (2) is caused by said adjusting actuating member (7) which member (7) serves to maintaining of a correct adjusting of the vertical dip of said reflector (1).

2. A headlight of Claim 1, **characterised in that** said opaque shield (8) is mounted in a holder (4) of said light source (2) or it is placed on said reflector (1).

3. A headlight of Claim 1, **characterised in that** said mechanism comprises an elastically deformable element (9) providing reciprocation and position fixation of said light source (2) for the low light beam mode.

4. A headlight of Claim 1, **characterised in that** said adjusting actuating member (7) uses an electric motor, preferably a stepping motor, or a hydraulic or pneumatic actuator as a drive.

5. A headlight of Claim 1, **characterised in that** said light source (2) is a spiralled filament of a halogen lamp, preferably with a filament oriented in transverse or axial position.

6. A headlight of Claim 1, **characterised in that** said light source (2) is a gas discharge arc, preferably arc oriented in transverse or axial position.
